(19) Europäisches Patentamt / European Patent Office / Office européen des brevets

(11) **EP 4 022 338 B1**

(12) **FASCICULE DE BREVET EUROPEEN**

(45) Date de publication et mention de la délivrance du brevet:
**15.05.2024 Bulletin 2024/20**

(21) Numéro de dépôt: **21746478.3**

(22) Date de dépôt: **20.07.2021**

(51) Classification Internationale des Brevets (IPC):
**G01S 5/02** *(2010.01)*

(52) Classification Coopérative des Brevets (CPC):
**G01S 5/0273; G01S 5/02528;** G01S 5/02213; G01S 5/0246

(86) Numéro de dépôt international:
**PCT/EP2021/070227**

(87) Numéro de publication internationale:
**WO 2022/023116 (03.02.2022 Gazette 2022/05)**

(54) **GÉOLOCALISATION D'UN ÉMETTEUR RADIO À L'AIDE D'UNE MODÉLISATION PRÉCISE DE LA PROPAGATION IONOSPHÉRIQUE**

GEOLOKALISIERUNG EINES FUNKSENDERS DURCH GENAUE MODELLIERUNG DER IONOSPHÄRISCHEN AUSBREITUNG

GEOLOCATING A RADIO TRANSMITTER THROUGH PRECISE MODELLING OF IONOSPHERIC PROPAGATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.07.2020 FR 2007717**

(43) Date de publication de la demande:
**06.07.2022 Bulletin 2022/27**

(73) Titulaire: **Airbus Defence and Space SAS**
**31402 Toulouse Cedex 4 (FR)**

(72) Inventeurs:
- **JEANNIN, Nicolas**
  **31402 Toulouse cedex 4 (FR)**
- **VOULOUZAN, Frédéric**
  **31402 Toulouse cedex 4 (FR)**

(74) Mandataire: **Ipside**
**6, Impasse Michel Labrousse**
**31100 Toulouse (FR)**

(56) Documents cités:
**US-A1- 2017 205 492     US-A1- 2019 120 928**

- **JACOBSON ABRAM R. ET AL: "Using geomagnetic birefringence to locate sources of impulsive, terrestrial VHF signals detected by satellites on orbit", RADIO SCIENCE, vol. 36, no. 4, 1 juillet 2001 (2001-07-01), pages 671-680, XP055794543, US ISSN: 0048-6604, DOI: 10.1029/2000RS002555 Extrait de l'Internet: URL:https://citeseerx.ist.psu.edu/viewdoc/download?doi=10.1.1.1007.5624&rep=rep1&type=pdf>**
- **YVON ERHEL ET AL: "An Operational HF System for Single Site Localization", MILITARY COMMUNICATIONS CONFERENCE, 2007. MILCOM 2007. IEEE, IEEE, PISCATAWAY, NJ, USA, 29 octobre 2007 (2007-10-29), pages 1-5, XP031232748, ISBN: 978-1-4244-1512-0**
- **QINGCHEN LIU ET AL: "Mapping Target Location from Doppler Data", ARXIV.ORG, CORNELL UNIVERSITY LIBRARY, 201 OLIN LIBRARY CORNELL UNIVERSITY ITHACA, NY 14853, 12 mars 2019 (2019-03-12), XP081132651,**

**Description**

**Domaine de l'invention**

La présente invention appartient au domaine de la surveillance des communications radio. Notamment, l'invention concerne un procédé et un dispositif pour géolocaliser un émetteur d'un signal haute fréquence.

**Etat de la technique**

Les systèmes de communications dans le domaine des hautes fréquences (HF pour « High Frequencies » dans la littérature anglo-saxonne) sont couramment utilisés dans le domaine militaire. En effet, bien que les bandes de fréquences disponibles soient particulièrement limitées, ces systèmes de communications sont simples à mettre en oeuvre et permettent d'effectuer des communications radio sur de longues distances au-delà de l'horizon radioélectrique (c'est-à-dire au-delà d'une ligne de visée directe) grâce aux rebonds des signaux radio sur l'ionosphère.

La surveillance et la géolocalisation des émetteurs utilisés pour ces communications hautes fréquences permettent d'avoir des informations pertinentes sur les théâtres d'opérations militaires.

Dans la présente description, on considère que le domaine des hautes fréquences (HF) désigne les ondes radioélectriques dont la fréquence est comprise entre trois mégahertz (3 MHz) et trente mégahertz (30 MHz).

La géolocalisation des émetteurs HF est conventionnellement effectuée à l'aide d'un récepteur comportant un réseau d'antennes implanté au sol et utilisant une technique de détection de la direction d'arrivée d'un signal (DOA pour « Direction Of Arrival » dans la littérature anglo-saxonne). Le réseau d'antennes d'un tel récepteur DOA requiert généralement une emprise géographique importante mais peut en contrepartie permettre des détections à longue distance.

La précision de géolocalisation pour un tel récepteur DOA est généralement faible en raison des spécificités liées à la bande HF, notamment à cause de l'étroitesse des canaux utilisés et de la complexité de la propagation radio en cas de rebonds sur l'ionosphère. Il convient d'ailleurs de noter que pour une erreur angulaire donnée, la précision de la détection de la direction d'arrivée d'un signal est proportionnelle à la distance de l'émetteur. Ainsi, plus l'émetteur est éloigné du récepteur DOA, et plus la précision de la géolocalisation de l'émetteur par le récepteur DOA sera faible.

Une amélioration des capacités de géolocalisation d'un émetteur d'un signal haute fréquence est donc souhaitable, que ce soit en termes de couverture géographique ou de précision de géolocalisation.

La demande de brevet US 2017/205492 A1 décrit la géolocalisation d'un émetteur HF au-delà de l'horizon à partir d'un ou plusieurs récepteurs terrestres, et à l'aide d'un modèle analytique de l'ionosphère et d'un algorithme de rétropropagation. Il est notamment proposé d'utiliser des modèles conventionnels de l'ionosphère : modèle Chapman, GAIM ou IRI par exemple.

La demande de brevet US 2019/120928 A1 décrit la géolocalisation d'un émetteur par un ou plusieurs récepteurs, notamment à l'aide de méthodes de type TDOA ou FDOA. En particulier, un satellite en orbite autour de la Terre peut jouer le rôle d'un récepteur.

**Exposé de l'invention**

La présente invention a pour objectif de remédier à tout ou partie des inconvénients de l'art antérieur, notamment ceux exposés ci-avant, en proposant une solution permettant d'améliorer les capacités de géolocalisation d'un émetteur d'un signal haute fréquence grâce notamment à la prise en compte de l'état instantané de l'ionosphère dans un algorithme de rétropropagation utilisé pour géolocaliser l'émetteur.

Les modes de réalisation couverts de l'invention sont définis par les revendications. L'exposé de l'invention qui est fait ci-après est une vue d'ensemble des divers aspects de l'invention. Cet exposé introduit certains concepts qui sont décrits plus en détail dans la description détaillée. Cet exposé n'est pas destiné à être utilisé isolément pour déterminer la portée des objets revendiqués. La portée des objets revendiqués est définie par les revendications ; les revendications peuvent être interprétées en se référant aux parties appropriées de l'ensemble de la description et de tout ou partie des dessins.

En particulier, et selon un premier aspect, il est proposé par la présente invention un procédé pour géolocaliser un émetteur d'un signal radio dans le domaine des hautes fréquences. Le procédé comporte une détermination d'une valeur d'au moins un paramètre relatif audit signal radio émis par l'émetteur. La valeur du paramètre est dépendante de la position géographique de l'émetteur à l'instant où le signal est émis. La valeur du paramètre est déterminée à partir de mesures effectuées sur le signal par un ou plusieurs récepteurs dont la position géographique est connue. L'un au moins des récepteurs est embarqué dans un satellite en orbite autour de la Terre. Le procédé comporte également une génération d'un modèle de propagation représentant, pour chacune d'une pluralité de positions candidates de l'émetteur au sein d'une région géographique d'intérêt, une valeur modélisée dudit paramètre. Le modèle de propagation est généré en se basant sur une modélisation d'un état instantané de l'ionosphère, c'est-à-dire une modélisation d'un état de l'ionosphère à un instant particulier correspondant à l'instant où les mesures sont effectuées. Le modèle de propagation est un modèle associant à chaque position candidate de l'émetteur une valeur modélisée du paramètre. La valeur modélisée est obtenue en « calculant » le chemin de propagation du signal pour la position candidate considérée. Enfin, le procédé comporte une estimation de la position géographique de l'émetteur au moment où le signal est émis à partir de la valeur ainsi déterminée pour ledit au moins un paramètre et à partir du modèle de propagation ainsi généré.

L'invention est particulièrement bien adaptée pour géolocaliser un émetteur d'un signal radio haute fréquence. Tel qu'indiqué précédemment, on entend par « signal radio haute fréquence » (ou signal HF) un signal formé par des ondes radioélectriques dont la fréquence est comprise entre trois mégahertz (3 MHz) et trente mégahertz (30 MHz). En effet, dans cette gamme de fréquence, un signal radio peut suivre une propagation par onde de ciel, c'est-à-dire avec réflexion vers la Terre après un ou plusieurs rebonds sur l'ionosphère, ou bien avec traversée de l'ionosphère vers l'espace.

Ledit « au moins un paramètre relatif au signal radio émis par l'émetteur » correspond par exemple à une direction d'arrivée du signal au niveau d'un récepteur (DOA pour « Direction Of Arrival »), une différence de temps d'arrivée du signal entre deux récepteurs (TDOA pour « Time Différence Of Arrival), ou une différence de fréquence d'arrivée du signal entre deux récepteurs (FDOA pour « Frequency Différence Of Arrival »). Un paramètre de type DOA comporte par exemple la combinaison d'un angle d'élévation et d'un azimut. Un paramètre de type TDOA peut comporter plusieurs différences de temps d'arrivée entre plusieurs paires de récepteurs dès lors que le nombre de récepteurs est supérieur à deux. De manière similaire, un paramètre de type FDOA peut comporter plusieurs différences de fréquence d'arrivée entre plusieurs paires de récepteurs dès lors que le nombre de récepteurs est supérieur à deux. Un « paramètre » au sens de l'invention peut donc correspondre à un vecteur d'observables de type DOA, TDOA ou FDOA. Aussi, une combinaison de plusieurs paramètres de type DOA, TDOA et/ou FDOA peut être utilisée.

Les mesures utilisées pour déterminer la valeur d'un paramètre peuvent correspondre à plusieurs mesures effectuées par un seul récepteur (par exemple plusieurs mesures effectuées respectivement pour différentes antennes d'un réseau d'antennes d'un récepteur DOA) ou à plusieurs mesures effectuées respectivement par différents récepteurs (par exemple plusieurs mesures effectuées respectivement par plusieurs récepteurs de type TDOA ou FDOA). Un récepteur peut être implanté au sol à la surface de la Terre. Rien n'empêche cependant qu'un récepteur soit embarqué dans une plateforme en haute altitude (par exemple un ballon dirigeable ou un drone déployé dans la stratosphère) ou bien dans un satellite en orbite autour de la Terre.

Dans le cas de la propagation par onde de ciel, la relation entre le paramètre relatif au signal radio et la position géographique de l'émetteur a une dépendance très forte à l'état ionosphérique. En effet, la valeur du paramètre dépend des caractéristiques des chemins de propagation (hauteur du ou des rebonds sur l'ionosphère, angle de sorties vers l'espace, vitesse de déplacement du milieu ionosphérique, etc.). Or, le canal de propagation trans-ionosphérique varie fortement en fonction de l'état d'ionisation de l'ionosphère. L'état de l'ionosphère est très variable en fonction de l'instant d'observation, notamment parce qu'il dépend de l'éclairement solaire et de l'interaction entre les particules éjectées par le Soleil et le champ géomagnétique terrestre. L'évolution des différentes espèces ionisées est de plus régie par des phénomènes physico-chimiques complexes qui peuvent être modélisé par des modèles physiques de l'évolution de l'ionosphère, de manière analogue à ce qui est réalisé par les modèles de prévision météorologiques pour les couches plus basses de l'atmosphère terrestre.

L'invention vise donc à inclure dans le processus de géolocalisation un modèle de propagation radio dans l'ionosphère prenant en compte un état instantané de l'ionosphère (c'est-à-dire un état de l'ionosphère à un instant particulier correspondant à l'instant où les mesures sont effectuées). La modélisation de l'état instantané de l'ionosphère peut être couplée avec une modélisation du champ géomagnétique terrestre. Le modèle de propagation permet d'associer à chaque position candidate de la région géographique d'intérêt une valeur modélisée du paramètre considéré. La résolution du problème de géolocalisation consiste alors par exemple à déterminer la position candidate dont la valeur modélisée associée est la plus proche de la valeur déterminée pour ledit paramètre à partir des mesures effectuées par le ou les récepteurs. Dans le cas ou plusieurs paramètres sont utilisés la position peut être déterminée en utilisant une métrique combinant ces différents paramètres et en trouvant la position candidate pour laquelle la valeur théorique de cette métrique est la plus proche de la valeur de cette même métrique déterminée à partir des mesures effectuées par le ou les récepteurs.

Dans des modes particuliers de mise en oeuvre, l'invention peut comporter en outre l'une ou plusieurs des caractéristiques suivantes, prises isolément ou selon toutes les combinaisons techniquement possibles.

Dans des modes particuliers de mise en oeuvre, le paramètre relatif au signal radio émis par l'émetteur figure parmi :

- une direction d'arrivée du signal au niveau d'un récepteur,
- une différence de temps d'arrivée du signal entre au moins deux récepteurs,
- une différence de fréquence d'arrivée du signal entre au moins deux récepteurs.

Dans des modes particuliers de mise en oeuvre, l'un au moins des récepteurs est embarqué dans un satellite en orbite autour de la Terre.

La bande de fréquences HF est actuellement négligée par la plupart des programmes spatiaux de renseignement d'origine électromagnétique (programmes connus sous l'acronyme ROEM, ou dans la littérature anglo-saxonne par le terme « Signals Intelligence » ou l'acronyme SIGINT). Les mesures d'un signal HF par un satellite en orbite autour de la Terre sont en effet considérées comme difficilement exploitables dans les algorithmes de géolocalisation (notamment ceux de type DOA, TDOA ou FDOA) en raison des conditions de propagation particulièrement complexes (rebonds ionosphériques, réfraction). Toutefois, l'information de fréquence et/ou de temps de propagation différentiel couplée à un modèle précis de propagation des signaux dans l'ionosphère peut permettre de récupérer une information pertinente pour améliorer la géolocalisation d'un émetteur HF. L'utilisation d'un récepteur spatio-porté est particulièrement pertinente dans le cas du FDOA dans la mesure où le déplacement du satellite sur son orbite permet d'obtenir des informations pertinentes sur un différentiel Doppler.

Dans des modes particuliers de mise en oeuvre, au moins deux paramètres différents sont utilisés.

Dans des modes particuliers de mise en oeuvre, au moins les deux paramètres suivants sont utilisés :

- une différence de temps d'arrivée du signal entre au moins deux récepteurs, et
- une différence de fréquence d'arrivée du signal entre au moins deux récepteurs, et l'un au moins l'un des récepteurs est embarqué dans un satellite en orbite autour de la Terre.

Dans des modes particuliers de mise en oeuvre, l'estimation de la position géographique de l'émetteur comporte la détermination d'une position géographique qui minimise une différence quadratique entre la valeur de paramètre déterminée pour l'émetteur à géolocaliser et les valeurs de ce paramètre modélisées par le modèle de propagation pour les différentes positions candidates.

Dans des modes particuliers de mise en oeuvre, la différence quadratique est pondérée par une variance d'erreur sur la valeur de paramètre déterminée pour l'émetteur à géolocaliser.

Dans des modes particuliers de mise en oeuvre, la modélisation d'un état instantané de l'ionosphère est obtenue en combinant un modèle statistique de l'état de l'ionosphère ou un modèle de physique ionosphérique avec une observation in-situ instantanée de l'ionosphère.

Le modèle IRI (acronyme de « International Reference Ionosphere ») est un exemple de modèle statistique de l'état de l'ionosphère. On entend par « modèle de physique ionosphérique » un modèle de prévision de l'état de l'ionosphère obtenu en modélisant des phénomènes physico-chimiques de l'ionosphère et des données in-situ assimilées pendant une période d'observation.

Selon un deuxième aspect, la présente invention concerne un dispositif de géolocalisation d'un émetteur d'un signal radio dans le domaine des hautes fréquences. Le dispositif de géolocalisation est adapté pour recevoir des mesures effectuées par un ou plusieurs récepteurs sur un signal radio émis par ledit émetteur. Les positions géographiques des différents récepteurs sont connues. Le dispositif comporte une unité de traitement configurée pour déterminer une valeur pour au moins un paramètre relatif audit signal radio, la valeur du paramètre étant dépendante de la position géographique de l'émetteur à l'instant où le signal est émis, la valeur du paramètre étant déterminée à partir des mesures effectuées par le ou les récepteurs. Le dispositif comporte en outre une unité de localisation configurée pour générer un modèle de propagation représentant, pour chacune d'une pluralité de positions candidates de l'émetteur au sein d'une région géographique d'intérêt, une valeur modélisée dudit paramètre en se basant sur une modélisation d'un état instantané de l'ionosphère, c'est-à-dire une modélisation d'un état de l'ionosphère à un instant particulier correspondant à l'instant où les mesures sont effectuées. L'unité de localisation est également configurée pour estimer la position géographique de l'émetteur à partir de la valeur déterminée pour ledit au moins un paramètre et du modèle de propagation généré. L'un au moins des récepteurs, desquels le dispositif de géolocalisation est adapté pour recevoir et traiter des mesures, est embarqué dans un satellite en orbite autour de la Terre.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, le paramètre relatif au signal radio émis par l'émetteur figure parmi :

- une direction d'arrivée du signal au niveau d'un récepteur,
- une différence de temps d'arrivée du signal entre au moins deux récepteurs,
- une différence de fréquence d'arrivée du signal entre au moins deux récepteurs.

Dans des modes particuliers de réalisation, au moins deux paramètres différents sont utilisés.

Dans des modes particuliers de réalisation, l'unité de localisation est configurée pour modéliser un état instantané de l'ionosphère en combinant un modèle statistique de l'état de l'ionosphère ou un modèle de physique ionosphérique avec une observation in-situ instantanée de l'ionosphère.

Dans des modes particuliers de réalisation, l'unité de localisation est configurée pour estimer la position géographique de l'émetteur en déterminant la position géographique qui minimise une différence quadratique entre la valeur de paramètre déterminée et les valeurs de ce paramètre modélisées par le modèle de propagation pour les différentes positions candidates.

Selon un troisième aspect, la présente invention concerne un système de géolocalisation comportant un dispositif de géolocalisation selon l'un quelconque des modes de réalisation précédent et au moins un récepteur destiné à être embarqué dans un satellite en orbite autour de la Terre. Ledit récepteur est par exemple configuré pour effectuer une mesure d'un instant d'arrivée et/ou d'une fréquence d'arrivée du signal radio émis par l'émetteur.

Selon un quatrième aspect, la présente invention concerne un produit programme d'ordinateur comportant un ensemble d'instructions de code de programme qui, lorsqu'elles sont exécutées par un ou plusieurs processeurs, configurent le ou les processeurs pour mettre en oeuvre un procédé selon l'un quelconque des modes de mise en oeuvre précédents.

**Présentation des figures**

L'invention sera mieux comprise à la lecture de la description suivante, donnée à titre d'exemple nullement limitatif, et faite en se référant aux figures 1 à 20 qui représentent :

[Fig. 1] une représentation schématique de différents chemins de propagation empruntés par un signal HF émis par un émetteur,

[Fig. 2] un graphique représentant une valeur de décalage fréquentiel (Doppler) mesurée par un récepteur embarqué dans un satellite en orbite autour de la Terre, en fonction de la position de l'émetteur, pour un signal à 9,2 MHz émis à 3h UTC,

[Fig. 3] un graphique représentant une valeur de décalage fréquentiel mesurée par un récepteur embarqué dans un satellite en orbite autour de la Terre, en fonction de la position de l'émetteur, pour la même position du satellite que pour le graphique de la figure 2, pour un signal à 9,2 MHz émis à 19h UTC,

[Fig. 4] un graphique représentant une valeur modélisée de décalage fréquentiel mesurée par un récepteur embarqué dans un satellite en orbite autour de la Terre, en fonction de la position de l'émetteur, pour la même position du satellite que pour les graphiques des figure 2 et 3, pour un signal émis à 15,1 MHz à 3h UTC,

[Fig. 5] un graphique représentant une valeur modélisée de décalage fréquentiel mesurée par un récepteur embarqué dans un satellite en orbite autour de la Terre, en fonction de la position de l'émetteur, pour la même position du satellite que pour les graphiques des figures 2 à 4, pour un signal émis à 15,1 MHz à 19h UTC,

[Fig. 6] un graphique représentant les chemins de propagation vers le Nord d'un signal à 9,2 MHz émis depuis Toulouse (France) à 19h UTC le 26 août 2019 (ce graphique met en évidence la variation de l'indice de réfraction de l'atmosphère en fonction de la position géographique et de l'altitude),

[Fig. 7] un graphique similaire celui de la figure 6, représentant les chemins de propagation vers le Nord d'un signal à 9,2 MHz émis depuis Toulouse (France) à 4h UTC le 26 août 2019,

[Fig. 8] une représentation schématique des principales étapes d'un procédé de géolocalisation d'un émetteur d'un signal HF,

[Fig. 9] une représentation schématique d'un dispositif de géolocalisation d'un émetteur d'un signal HF,

[Fig. 10] une représentation sur une carte d'un émetteur à géolocaliser et de trois récepteurs impliqués dans la géolocalisation dudit émetteur,

[Fig. 11] un graphique représentant une valeur modélisée de l'angle d'élévation mesurée par un récepteur de type réseau DOA, en fonction de la position de l'émetteur, [Fig. 12] une représentation sur une carte d'une estimation de la position géographique d'un émetteur avec une géolocalisation impliquant uniquement un récepteur de type réseau DOA,

[Fig. 13] un graphique représentant une valeur modélisée de la différence de temps d'arrivée (TDOA) mesurée entre deux récepteurs au sol, en fonction de la position de l'émetteur,

[Fig. 14] une représentation sur une carte d'une estimation de la position géographique d'un émetteur avec une géolocalisation de type DOA et TDOA impliquant deux récepteurs au sol,

[Fig. 15] un graphique représentant une valeur modélisée de la différence de temps d'arrivée (TDOA) mesurée entre un récepteur au sol et un récepteur embarqué dans un satellite en orbite autour de la Terre, en fonction de la position de l'émetteur, pour une position donnée du satellite,

[Fig. 16] un graphique représentant une valeur modélisée de différence de fréquence d'arrivée (FDOA) mesurée entre un récepteur au sol et un récepteur embarqué dans un satellite en orbite autour de la Terre, en fonction de la position de l'émetteur, pour une position donnée du satellite,

[Fig. 17] une représentation sur une carte d'une estimation de la position géographique d'un émetteur avec une géolocalisation de type TDOA et FDOA impliquant un récepteur au sol et un récepteur embarqué dans un satellite en orbite autour de la Terre,

[Fig. 18] un graphique représentant la densité électronique de l'atmosphère en fonction de l'altitude et en fonction de la distance depuis Toulouse (France) vers le Nord à 2h UTC le 25 août 2015,

[Fig. 19] un graphique représentant la densité électronique de l'atmosphère en fonction de l'altitude et en fonction de la distance depuis Toulouse (France) vers le Nord à 4h UTC le 25 août 2015

[Fig. 20] une représentation de l'impact d'une modélisation imparfaite de l'état de l'ionosphère dans l'estimation de la position d'un émetteur (à comparer aux figures 12, 14 et 17 pour lesquelles la modélisation de l'état de l'ionosphère est considérée parfaite).

Dans ces figures, des références identiques d'une figure à une autre désignent des éléments identiques ou analogues. Pour des raisons de clarté, les éléments représentés ne sont pas nécessairement à une même échelle, sauf mention contraire.

## Description détaillée d'un mode de réalisation de l'invention

Dans la suite de la description, on se place dans le cas où l'on souhaite géolocaliser un émetteur d'un signal radio haute fréquence (HF).

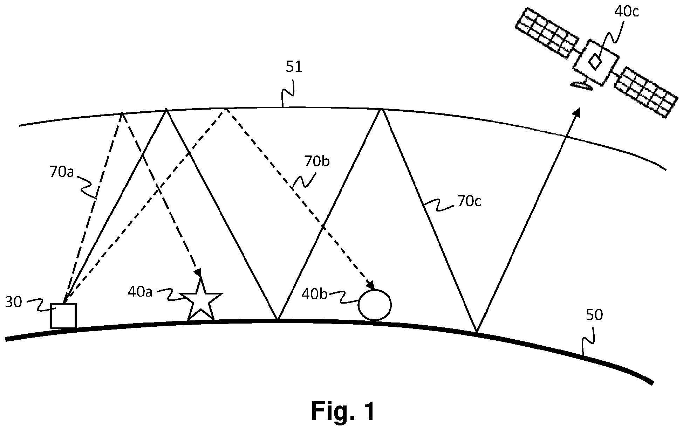

La figure 1 représente schématiquement différents trajets 70a, 70b, 70c d'un signal HF émis par un émetteur. Dans l'exemple illustré à la figure 1, un premier trajet 70a est capté par un premier récepteur 40a implanté à la surface 50 de la Terre après avoir « rebondit » sur l'ionosphère qui est représentée de façon simplifiée par la ligne 51. De manière similaire, un deuxième trajet 70b est capté par un deuxième récepteur 40b situé à la surface 50 de la Terre après avoir rebondit différemment sur l'ionosphère. Enfin, un troisième trajet 70c finit par s'échapper vers l'espace après avoir rebondit deux fois sur l'ionosphère, le trajet est capté par un récepteur 40c embarqué dans un satellite en orbite autour de la Terre.

L'ionosphère est une couche de l'atmosphère se situant entre 60 et 1000 kilomètres d'altitude. Cette couche est caractérisée par une ionisation partielle des gaz de l'atmosphère sous l'effet du rayonnement ultraviolet solaire qui réagit sur une partie des molécules atmosphériques en les amputant d'un électron, formant ainsi un plasma contenant des nombres égaux d'électrons et d'ions positifs.

On parle communément de « réflexion » ou de « rebond » sur l'ionosphère d'une onde électromagnétique (notamment une onde radio d'un signal dans la bande de fréquences HF), mais il s'agit en réalité de multiples réfractions successives. L'indice de réfraction d'un milieu ionisé dépend à la fois de la fréquence considérée et de la densité électronique du milieu. Les électrons jouent un rôle prépondérant en étant mis en mouvement sous l'influence du champ électrique de l'onde électromagnétique. L'énergie reçue de l'onde électromagnétique par les électrons leur permet d'osciller et de rayonner à nouveau une onde de fréquence identique mais de phase différente, provoquant ainsi un changement de direction de l'onde incidente. L'indice de réfraction dans l'ionosphère dépend notamment de la fréquence de l'onde incidente et de la densité d'électrons dans le milieu. Or, la densité d'électrons dans l'ionosphère dépend de plusieurs facteurs, notamment de l'altitude et du rayonnement solaire. L'indice de réfraction dans l'ionosphère pour une fréquence donnée varie donc au cours du temps et en fonction de l'altitude (l'indice de réfraction diminue au fur et à mesure que l'ionisation augmente). Lorsque l'onde électromagnétique d'un signal HF traverse l'ionosphère, l'indice de réfraction varie de façon continue, et l'onde est déviée progressivement pour suivre un trajet ressemblant à une courbe. Le trajet peut alors finir par être redirigé vers la surface 50 de la Terre (on parle de « rebond » sur l'ionosphère) ou s'échapper vers l'espace. La hauteur d'un rebond sur l'ionosphère et l'angle de sortie vers l'espace pour un trajet d'un signal HF dépend donc fortement de l'état de l'ionosphère au moment de la propagation du signal. Sur la figure 1, la ligne 51 représente schématiquement l'altitude à laquelle a lieu le rebond sur l'ionosphère pour les différents trajets 70a, 70b, 70c du signal HF considéré.

Dans l'exemple considéré et illustré sur la figure 1, le récepteur 40a est un récepteur de type réseau DOA (récepteur avec un réseau d'antennes occupant une emprise au sol relativement importante, par exemple le réseau comporte une douzaine d'antennes réparties sur un cercle de 50 mètres de diamètre). Le réseau DOA permet de mesurer un angle d'azimut et une élévation d'incidence d'un signal capté par le récepteur 40a. L'azimut et l'angle d'élévation mesurés par le réseau DOA correspondent respectivement à un plan azimutal contenant l'émetteur 30 recherché et à la direction d'incidence du signal. Différentes positions géographiques de l'émetteur 30 peuvent correspondre à un angle d'élévation donné si on considère la possibilité de rebonds multiples.

Le récepteur 40b est par exemple un récepteur mono-antenne de type TDOA et/ou FDOA permettant de mesurer une différence de temps d'arrivée et/ou une différence de fréquence d'arrivée du signal au niveau du récepteur 40b par rapport au temps d'arrivée et/ou à la fréquence d'arrivée du même signal (selon un autre trajet) au niveau d'un autre récepteur, par exemple l'un des récepteurs 40a ou 40c (il est à noter que, outre son rôle dans une géolocalisation de type DOA, le récepteur 40a peut aussi être impliqué dans une géolocalisation de type TDOA et/ou FDOA).

Le récepteur 40c est embarqué dans un satellite en orbite autour de la Terre et peut également être de type TDOA et/ou FDOA, par exemple en collaboration avec l'un des récepteurs 40a ou 40b.

Il convient de noter que les différents récepteurs impliqués dans des méthodes de type TDOA ou FDOA doivent être synchronisés en temps et en fréquence, par exemple via un signal de référence, une horloge référencée GNSS ou en utilisant une horloge ultra-stable.

L'utilisation de méthodes de type TDOA ou FDOA pour la géolocalisation d'un émetteur 30 d'un signal HF nécessite cependant une bonne connaissance des conditions de propagation ionosphériques, en particulier de la hauteur et de la position des couches à la source des rebonds ionosphériques. De manière avantageuse, les méthodes de type FDOA peuvent se baser sur une connaissance de la vitesse de déplacement des couches réfléchissantes de l'ionosphère accessible par des méthodes in-situ.

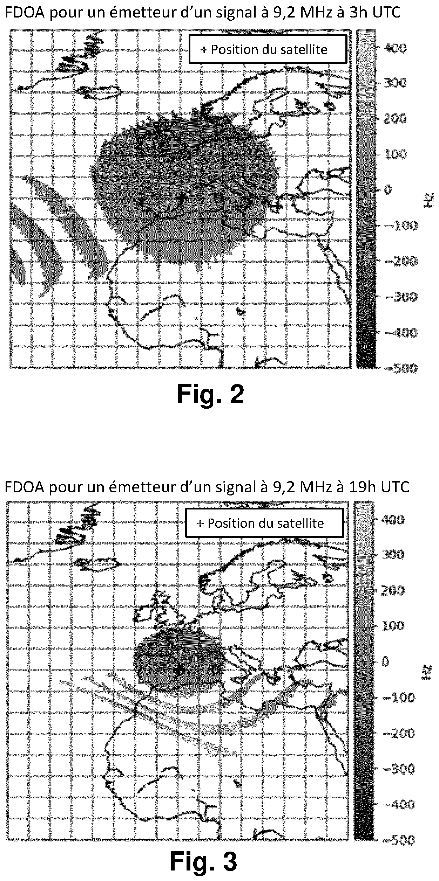

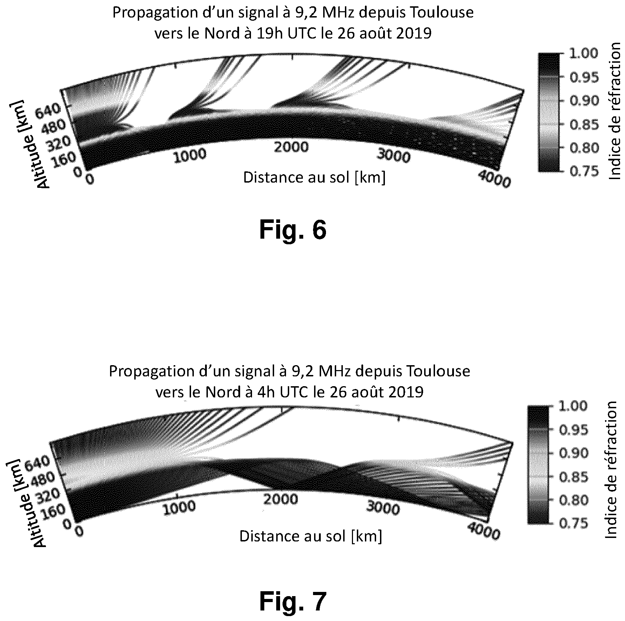

Aussi, pour un récepteur 40c spatio-porté, la zone de visibilité du signal depuis l'espace est morcelée en fonction des possibilités de traversée de la couche ionosphérique par le signal. Les figures 2 à 5 représentent des exemples de couverture pour un récepteur 40c spatio-porté obtenus en utilisant d'une part des données de densités électroniques du modèle IRI (acronyme de « International Reference Ionosphère ») et d'autre part un modèle de propagation ionosphérique tel que par exemple celui illustré aux figures 6 et 7.

Le graphique de la figure 2 représente une valeur de décalage fréquentiel (différentiel Doppler, FDOA) mesurée en Hertz (Hz) par un récepteur 40c embarqué dans un satellite en orbite autour de la Terre, en fonction de la position de l'émetteur, modélisée pour un signal à 9,2 MHz émis à 3h UTC (temps universel coordonné). La position du satellite est représentée par la croix située au centre de la carte du graphique. Dans l'exemple considéré, le satellite se déplace à 6 km/s dans une direction Nord-Sud à 800 km d'altitude. Il apparaît clairement sur le graphique des zones de couverture (zones colorées formant une sorte de disque relativement large au centre et des franges sur la gauche) correspondant à des positions d'un émetteur 30 auxquelles un signal HF émis par l'émetteur serait visible par le récepteur 40c embarqué dans le satellite et pour lesquelles le satellite peut mesurer un décalage de fréquence par rapport à la fréquence théorique du signal. En revanche, un signal émis par un émetteur 30 situé dans une zone blanche de la carte ne pourrait pas atteindre le récepteur 40c embarqué dans le satellite.

Le graphique de la figure 3 est similaire à celui de la figure 2, mais pour un instant différent, à savoir à 19h UTC le même jour (même position du satellite, même fréquence d'émission du signal à 9,2 MHz). Il apparaît clairement que les zones de couvertures varient fortement en fonction des conditions ionosphériques.

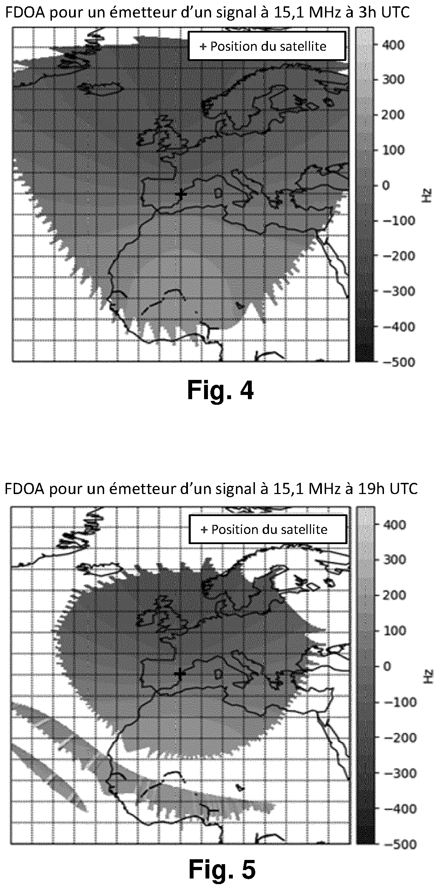

Les graphiques des figures 4 et 5 sont similaires à ceux des figures 2 et 3 mais pour un signal émis à 15,1 MHz. Le graphique de la figure 4 correspond à une observation à 3h UTC ; le graphique de la figure 5 correspond à une observation à 19h UTC. Il apparaît ainsi clairement que les zones de couvertures varient aussi fortement en fonction de la fréquence du signal.

Les graphiques des figures 6 et 7 illustrent ce morcellement variable de la zone de visibilité depuis l'espace pour un signal HF émis par un émetteur 30 à la surface de la Terre.

Le graphique de la figure 6 représente les chemins de propagation à travers l'ionosphère, vers le Nord, d'un signal à 9,2 MHz émis depuis Toulouse (France) à 19h UTC le 26 août 2019. Ce graphique met en évidence la variation de l'indice de réfraction dans l'atmosphère en fonction de l'altitude et de la position géographique. Les zones colorées correspondent à des trajets possibles du signal. Les zones blanches correspondent à des zones ne comportant pas de trajet possible du signal (similairement aux zones blanches représentées sur les figures 2 à 5).

Le graphique de la figure 7 est similaire celui de la figure 6, mais pour un instant différent, à savoir à 4h UTC le même jour. Les différences entre les figures 6 et 7 illustrent la variabilité des zones de visibilité depuis l'espace, et la variabilité des zones de visibilité au sol après un ou plusieurs rebonds, pour un signal HF émis par un émetteur situé à la surface de la Terre. Cette variabilité est due à la variabilité de l'état de l'ionosphère au cours du temps, notamment en fonction du rayonnement solaire.

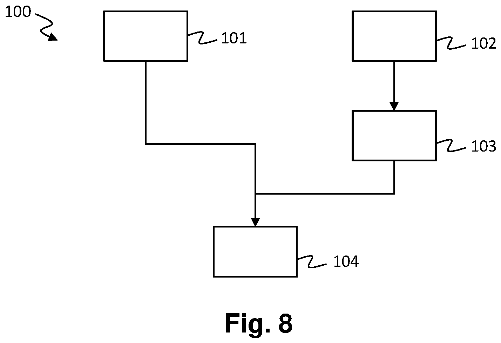

La figure 8 représente schématiquement les principales étapes d'un procédé 100 selon l'invention pour géolocaliser un émetteur 30 d'un signal radio HF.

Tel qu'illustré sur la figure 8, le procédé 100 comporte une étape de détermination 101 d'une valeur pour au moins un paramètre relatif au signal radio, la valeur du paramètre étant dépendante de la position géographique de l'émetteur 30 à l'instant où le signal est émis. La valeur du paramètre est déterminée à partir de mesures effectuées sur le signal par un ou plusieurs récepteurs 40a, 40b, 40c comme par exemple ceux illustrés sur la figure 1. Le paramètre relatif au signal radio émis par l'émetteur est par exemple une direction d'arrivée du signal au niveau d'un récepteur (DOA), un temps de propagation du signal (en supposant que l'on connaisse l'instant d'émission du signal), un décalage fréquentiel par rapport à une fréquence d'émission du signal (en supposant que celle-ci soit connue), une différence de temps d'arrivée du signal entre au moins deux récepteurs (TDOA), ou une différence de fréquence d'arrivée du signal entre au moins deux récepteurs (FDOA). Ces exemples ne sont pas exhaustifs, et d'autres paramètres radio pourraient être envisageables. Les mesures utilisées pour déterminer la valeur d'un paramètre peuvent correspondre à plusieurs mesures effectuées par un seul récepteur (par exemple plusieurs mesures effectuées respectivement pour différentes antennes d'un réseau d'antennes d'un récepteur DOA) ou à plusieurs mesures effectuées respectivement par différents récepteurs (par exemple plusieurs mesures effectuées respectivement par plusieurs récepteurs mono-antenne de type TDOA ou FDOA). Un récepteur peut par exemple être implanté au sol à la surface de la Terre, ou bien être embarqué dans une plateforme en haute altitude (ballon dirigeable, drone, etc.) ou dans un satellite en orbite autour de la Terre.

Tel qu'illustré sur la figure 8, le procédé 100 comporte également une étape de modélisation 102 d'un état instantané de l'ionosphère. La modélisation d'un état instantané de l'ionosphère est par exemple obtenue à partir d'un modèle statistique de l'état de l'ionosphère. L'IRI (« International Reference Ionosphère ») est un exemple de modèle statistique de l'état de l'ionosphère. Ce modèle statistique peut avantageusement être combiné avec des données d'observation in-situ de l'ionosphère. Des mesures in-situ instantanées de l'état de l'ionosphère (notamment en termes de densité d'électrons et de vitesse de déplacement de l'ionosphère) peuvent par exemple être obtenues à l'aide d'une iono-sonde, d'un radar HF, de données d'accéléromètres, de données de la composition chimique de l'ionosphère, etc.). On entend par modélisation d'un état « instantané » de l'ionosphère le fait que la modélisation décrit l'état de l'ionosphère à un instant particulier correspondant à l'instant d'émission du signal HF par l'émetteur 30 recherché. Alternativement ou en complément au modèle statistique de l'ionosphère, il est également possible d'utiliser un modèle de physique ionosphérique fournissant des prévisions sur l'état de l'ionosphère à partir de modélisations physico-chimiques et de données in-situ assimilées pendant une période d'observation.

Le procédé 100 comporte aussi une étape de génération 103 d'un modèle de propagation représentant, pour chacune d'une pluralité de positions candidates de l'émetteur 30 au sein d'une région géographique d'intérêt, une valeur modélisée dudit paramètre en se basant sur la modélisation de l'état instantané de l'ionosphère. On entend par « région géographique d'intérêt » une région géographique dans laquelle on souhaite surveiller la présence d'éventuelles communications HF et géolocaliser les émetteurs de ces communications HF.

Selon un premier exemple, le modèle de propagation fournit une fonction de régression permettant d'associer à une position géographique donnée une valeur modélisée du paramètre considéré. Selon un autre exemple, la région d'intérêt peut être quadrillée et chaque zone du quadrillage peut être associée à une valeur modélisée du paramètre considéré.

Enfin, le procédé 100 comporte une estimation 104 de la position géographique de l'émetteur 30 au moment où le signal est émis à partir de la valeur de paramètre déterminée à l'étape 101, et à partir du modèle de propagation généré à l'étape 103. Il s'agit pour cela de déterminer la position candidate dont la valeur modélisée associée dans le modèle de propagation est la plus proche de la valeur déterminée pour ledit paramètre à partir des mesures effectuées par le ou les récepteurs 40a, 40b, 40c.

Dans des modes particuliers de mise en oeuvre, l'estimation 104 de la position géographique de l'émetteur 30 comporte la détermination d'une position géographique qui minimise une différence quadratique entre la valeur de paramètre déterminée pour l'émetteur 30 à géolocaliser et les valeurs modélisées du modèle de propagation pour les différentes positions candidates. La différence quadratique peut être pondérée par une variance d'erreur sur des valeurs de paramètres déterminées pour l'émetteur 30 à géolocaliser.

Il convient bien entendu de noter que plusieurs paramètres peuvent être utilisés conjointement (par exemple une différence de temps d'arrivée (TDOA) et une différence de fréquence d'arrivée (FDOA)).

Pour une fonction $f$ représentant le modèle de propagation, et pour un vecteur O d'observables déterminées pour un signal HF, il s'agit de trouver la position p qui vérifie :

[Math.1]

$$\min_{p} \left(O - f(p)\right)^T V^{-1}(O - f(p))$$

La covariance de l'imprécision de la géolocalisation dans le cas d'un modèle parfait de ces paramètres est donnée par :

[Math.2]

$$\Sigma = (J^T V^{-1} J)^{-1}$$

Où J est la jacobienne de la fonction f modélisant les valeurs de paramètres en fonction de la position géographique.

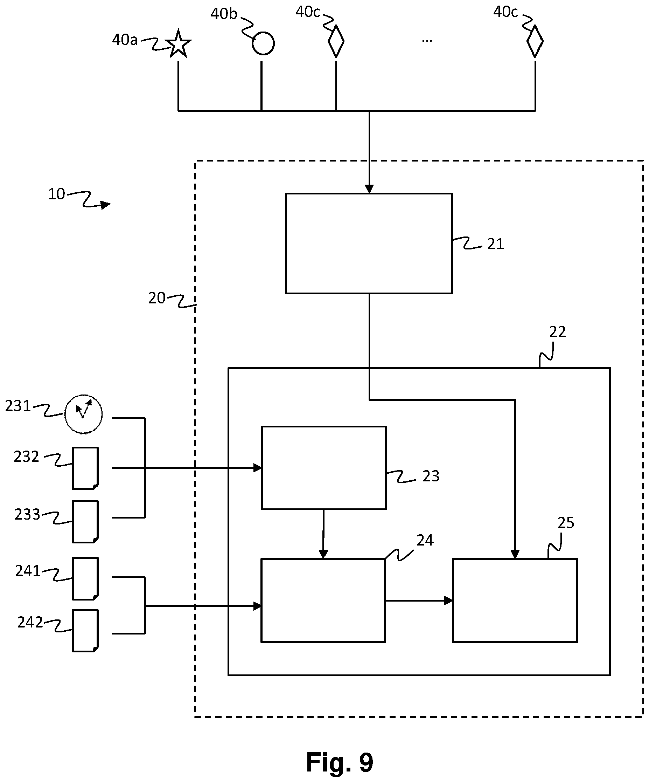

La figure 9 représente schématiquement un exemple de dispositif 20 de géolocalisation d'un émetteur d'un signal HF pour mettre en oeuvre le procédé 100 selon l'invention.

Le dispositif 20 est adapté pour recevoir des mesures effectuées par un ou plusieurs récepteurs 40a, 40b, 40c sur un signal radio HF émis par un émetteur 30 dont on cherche à déterminer la position géographique. Dans ce but le dispositif 20 peut comporter un module de communication (non représenté sur la figure 9) pour recevoir des messages selon un protocole de communication sans fil en provenance des différents récepteurs 40a, 40b, 40c. Alternativement, une entité distincte du dispositif 20 (non représentée sur la figure 9) peut être responsable de collecter les mesures effectuées par les différents récepteurs 40a, 40b, 40c et pour les transmettre au dispositif 20 selon un protocole de communication filaire ou sans fil.

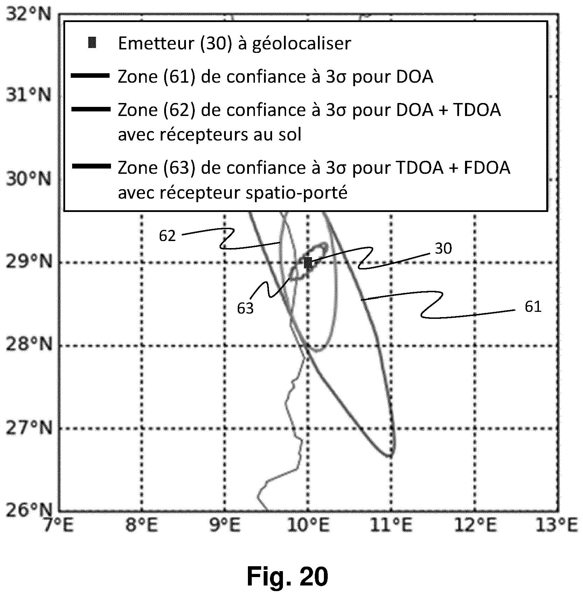

Tel qu'illustré sur la figure 20, le dispositif 20 comporte une unité de traitement 21 configurée pour déterminer une valeur pour au moins un paramètre relatif au signal radio à partir des mesures effectuées par le ou les récepteurs 40a, 40b, 40c (la valeur dudit paramètre étant dépendante de la position géographique de l'émetteur 30 à l'instant où le signal est émis). L'unité de traitement 21 peut aussi s'occuper, lorsque cela est nécessaire, de la synchronisation des mesures effectuées par les différents récepteurs.

Le dispositif 20 comporte en outre une unité de localisation 22. L'unité de localisation 22 comporte par exemple un premier module de calcul 23 configuré pour générer un modèle instantané de l'état de l'ionosphère à l'instant où le signal est émis par l'émetteur recherché (voir étape 102 du procédé 100 précédemment décrit en référence à la figure 8). Ce premier module de calcul 23 prend par exemple en entrée l'instant (date/heure 231) d'émission du signal (correspondant sensiblement à l'instant de réception dudit signal), des données 232 observées in-situ dans l'ionosphère audit instant d'émission (ou à un instant proche dudit instant), et des données 233 statistiques de l'état de l'ionosphère (données de météo spatiale). Ce premier module de calcul 23 fournit par exemple en sortie une représentation de la distribution de la densité d'électrons dans l'ionosphère à l'instant d'émission du signal considéré.

L'unité de localisation 22 comporte également un deuxième module de calcul 24 configuré pour générer le modèle de propagation à partir du modèle instantané de l'état de l'ionosphère à l'instant où le signal est émis (voir étape 103 du procédé 100 décrit en référence à la figure 8). Ce deuxième module de calcul 24 prend par exemple en entrée des données 241 sur les caractéristiques radioélectriques du signal considéré (par exemple la fréquence et la polarisation) et des données 242 sur des caractéristiques géométriques des différents récepteurs. Ce deuxième module de calcul 24 fournit en sortie des valeurs modélisées, pour le paramètre considéré, pour différentes positions candidates de l'émetteur.

L'unité de localisation 22 comporte également un troisième module de calcul 25 configuré pour estimer la position géographique de l'émetteur 30 à partir du modèle de propagation ainsi généré et à partir des valeurs de paramètres déterminés par l'unité de traitement 21 (voir étape 104 du procédé 100 décrit en référence à la figure 8).

L'unité de traitement 21 et les différents modules de calcul 23, 24, 25 de l'unité de localisation 22 peuvent être des entités physiques distinctes ou former une seule entité physique. Ces différents éléments peuvent par exemple comporter un ou plusieurs processeurs et des moyens de mémorisation (disque dur magnétique, mémoire électronique, disque optique, etc.) dans lesquels est mémorisé un produit programme d'ordinateur, sous la forme d'un ensemble d'instructions de code de programme à exécuter pour mettre en oeuvre les étapes du procédé 100 de géolocalisation selon l'invention. Alternativement ou en complément, le dispositif 20 peut comporter un ou des circuits logiques programmables (FPGA, PLD, etc.), et/ou un ou des circuits intégrés spécialisés (ASIC), et/ou un ensemble de composants électroniques discrets, etc., adaptés à mettre en oeuvre tout ou partie desdites étapes du procédé 100.

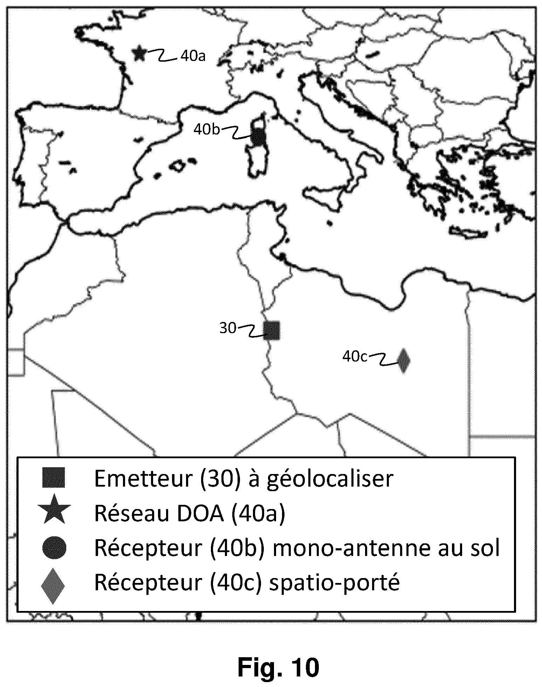

Les figures 10 à 17 illustrent différents exemples de mise en oeuvre de l'invention pour géolocaliser un émetteur d'un signal HF à l'aide de différents récepteurs et différents algorithmes de géolocalisation (DOA, TDOA et/ou FDOA). Ces exemples ont été simulés en considérant les paramètres principaux suivants :

[Table 1]

| | |
|---|---|
| Date et heure | 2015-08-2503 :00 UTC |
| Modèle ionosphérique | IRI 2012 |
| | |
| Fréquence du signal | 9,2 MHz |
| Largeur de bande du signal | 8 kHz |
| Temps d'observation | 0,1 s |
| SNR par antenne | -5 dB |
| | |
| Nombre d'antennes du réseau DOA | 12 |
| Diamètre du réseau DOA | 50m |
| Ecart type de mesure en azimuth | 0,5° |
| Ecart type de mesure en élévation | 1° |
| | |

(suite)

| Ecart type de mesure de TDOA | 5 μs |
|---|---|
| Ecart type de mesure de FDOA | 1 Hz |
| Vitesse du satellite | 6 km/s en direction Nord-Sud |

La figure 10 représente sur une carte la position géographique d'un émetteur 30 à géolocaliser et de trois récepteurs 40a, 40b, 40c pouvant être impliqués dans la géolocalisation de l'émetteur 30 selon un procédé 100 de géolocalisation selon l'invention (le dispositif 20 de géolocalisation n'est pas représenté, sa position n'ayant pas d'importance). Le récepteur 40a est un récepteur de type réseau DOA implanté au sol (réseau de 12 antennes réparties sur un cercle de 50m de diamètre), le récepteur 40a peut cependant également être impliqué dans une méthode de géolocalisation de type TDOA ou FDOA. Le récepteur 40b est un récepteur mono-antenne pouvant être impliqué dans une méthode de géolocalisation de type TDOA ou FDOA. Le récepteur 40c est embarqué dans un satellite en orbite autour de la Terre et peut être impliqué dans une méthode de géolocalisation de type TDOA ou FDOA. La position du récepteur 40c sur la carte correspond à l'intersection d'un axe passant par le satellite et par le centre de la Terre avec la surface de la Terre.

Dans un premier mode de mise en oeuvre, seul le récepteur 40a de type réseau DOA est utilisé. Le réseau DOA permet de mesurer un angle d'azimut et une élévation d'incidence d'un signal capté par le récepteur 40a. L'azimut et l'angle d'élévation mesurés par le réseau DOA correspondent respectivement à un plan azimutal contenant l'émetteur 30 recherché et à la direction d'incidence du signal.

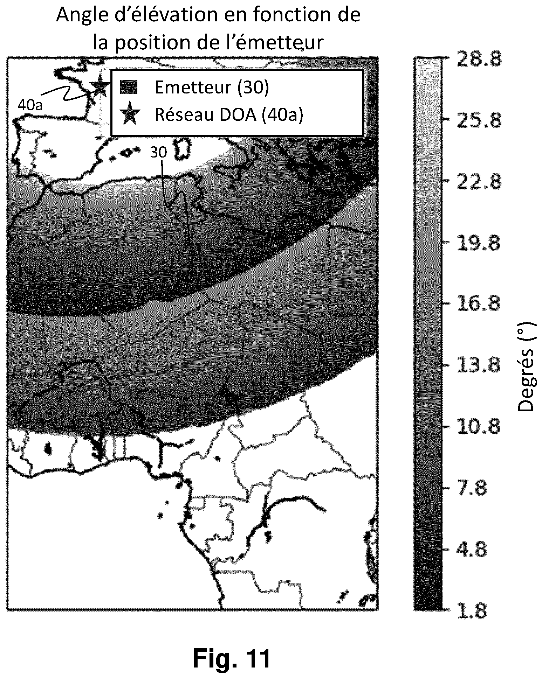

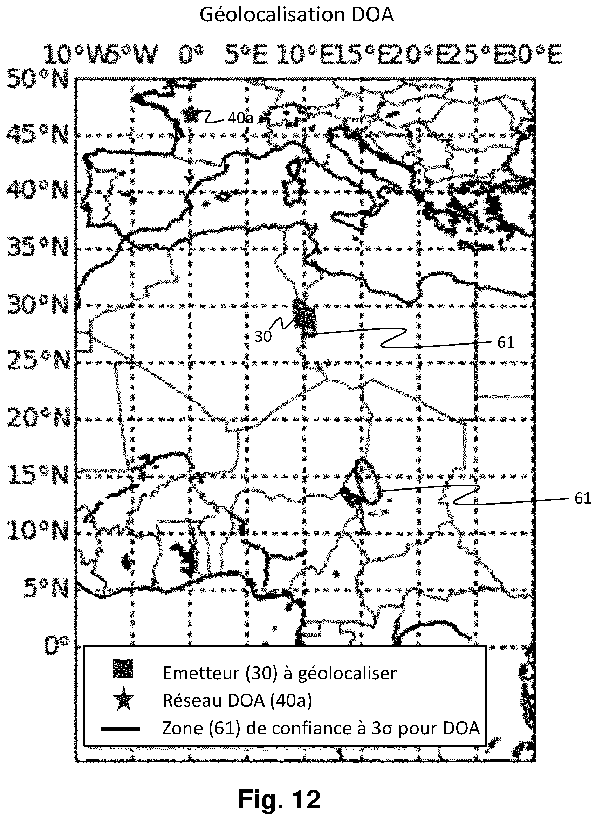

La figure 11 est une représentation graphique d'un modèle de propagation représentant une valeur modélisée de l'angle d'élévation observé par le récepteur 40a pour un signal émis en provenance d'une position géographique donnée de l'émetteur. En raison de la possibilité de rebonds multiples, différentes positions géographiques d'un émetteur peuvent correspondre à un angle d'élévation donné, ce qui conduit à des ambigüités comme cela est illustré par la figure 12.

La figure 12 représente une estimation de la position géographique de l'émetteur 30 pour le premier mode de mise en oeuvre impliquant uniquement un récepteur de type réseau DOA. Les deux zones 61 représentent les positions géographiques possibles de l'émetteur 30 pour une incertitude à 3σ (c'est-à-dire les positions pour lesquelles l'angle d'élévation observé par le récepteur 40a diffèrent des valeurs modélisées du modèle de propagation par plus de trois fois l'écart type). Il convient de noter que dans ce cas la géolocalisation est plus sensible aux incertitudes d'élévation qu'aux incertitudes d'azimut.

Dans un deuxième mode de mise en oeuvre, les deux récepteurs 40a, 40b terrestres sont synchronisés entre eux pour associer une méthode de géolocalisation de type TDOA à la méthode DOA précédemment décrite pour le premier mode de mise en oeuvre. Une mesure d'une différence de temps d'arrivée peut être déterminée, de manière conventionnelle, à partir de la mesure de l'instant d'arrivée du signal au niveau de chacun des deux récepteurs 40a, 40b.

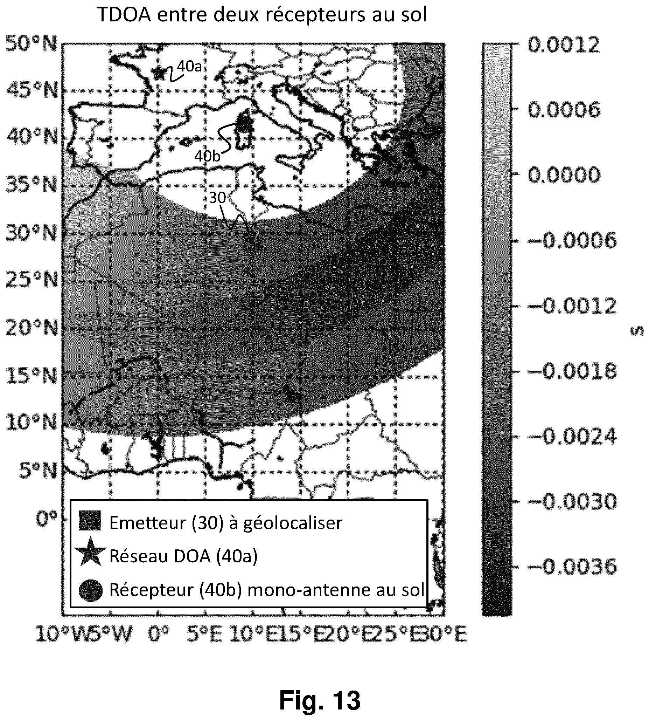

La figure 13 est une représentation graphique d'un modèle de propagation représentant une valeur modélisée de la différence de temps d'arrivée (TDOA) mesurée (en secondes) entre les deux récepteurs 40a, 40b pour un signal émis en provenance d'une position géographique donnée de l'émetteur (en cas de trajets multiples, le trajet le plus rapide est pris en compte). Il est à noter que des inversions rapides du signe du TDOA peuvent intervenir dans certaines zones, particulièrement dans des zones de transitions entre arrivée avec un ou deux rebonds. Par conséquent contrairement à une localisation en utilisant des propagations en ligne de visée les iso-TDOA ne sont pas des hyperboles sur toute la couverture. La zone de couverture et d'interception par cette méthode est très variable dans le temps. Il est nécessaire que les deux récepteurs soient dans la zone de couverture de l'émetteur, et celle-ci va varier sensiblement suivant l'heure, la saison, la position dans le cycle solaire et la fréquence utilisée.

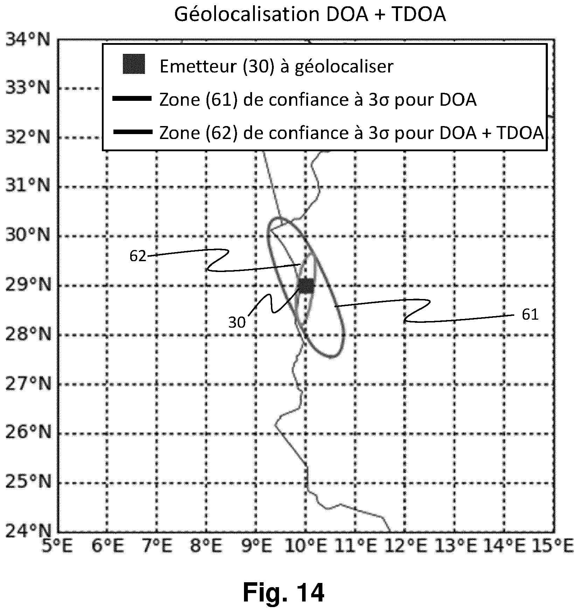

La figure 14 représente une estimation de la position géographique de l'émetteur 30 pour le deuxième mode de mise en oeuvre avec une géolocalisation de type DOA et TDOA impliquant deux récepteurs 40a, 40b au sol. L'association du TDOA au DOA permet de lever avec une forte probabilité les ambigüités de géolocalisation uniquement par DOA découlant des réflexions multiples. Sur la figure 14, les deux zones 61 et 62 représentent les positions géographiques possibles de l'émetteur 30 pour une incertitude à 3σ respectivement pour la méthode DOA seule et pour l'association des méthodes DOA et TDOA. On constate un accroissement important de la précision de géolocalisation en intégrant du TDOA dans le processus de géolocalisation.

Dans un troisième mode de mise en oeuvre, les trois récepteurs 40a, 40b, 40c sont synchronisés entre eux pour combiner les méthodes de géolocalisation de type DOA, TDOA et FDOA. Dans l'exemple considéré, les récepteurs 40a et 40c collaborent pour une méthode de géolocalisation de type TDOA, et les récepteurs 40b et 40c collaborent pour une méthode de géolocalisation de type FDOA.

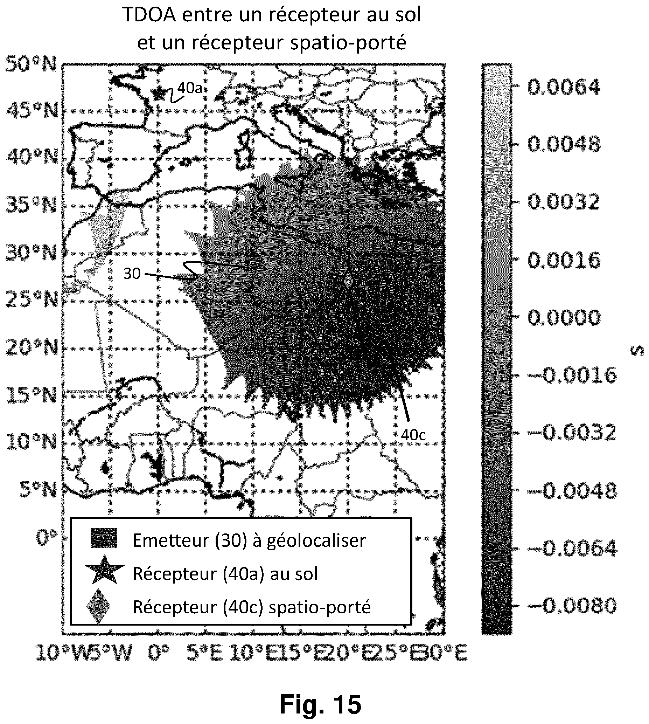

La figure 15 est une représentation graphique d'un modèle de propagation représentant une valeur modélisée de la différence de temps d'arrivée (TDOA) mesurée (en secondes) entre les deux récepteurs 40a, 40c pour un signal émis en provenance d'une position géographique donnée de l'émetteur, pour une position donnée du satellite qui embarque le récepteur 40c.

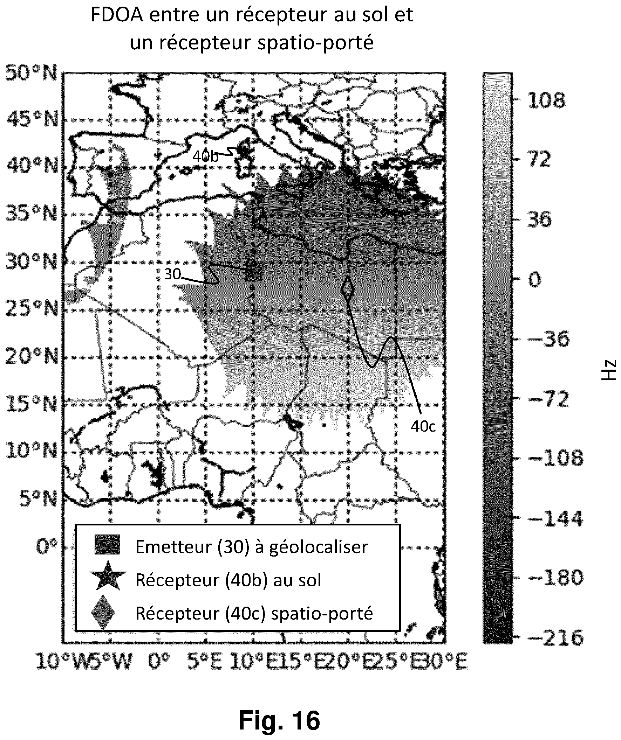

La figure 16 est une représentation graphique d'un modèle de propagation représentant une valeur modélisée de la différence de fréquence d'arrivée (FDOA) mesurée (en Hertz) entre les deux récepteurs 40b, 40c pour un signal émis en provenance d'une position géographique donnée de l'émetteur, pour une position donnée du satellite qui embarque le récepteur 40c.

Les différents modèles de propagation décrits en référence aux figures 11, 13, 15 et 16 sont définis en se basant sur une modélisation instantanée de l'état de l'ionosphère à l'instant où le signal est émis (instant considéré identique à l'instant où le signal est reçu par l'un des récepteurs), à savoir le 25 août 2015 à 3h UTC dans l'exemple considéré. Ces différents modèles de propagation peuvent être combinés entre eux pour former un modèle de propagation global.

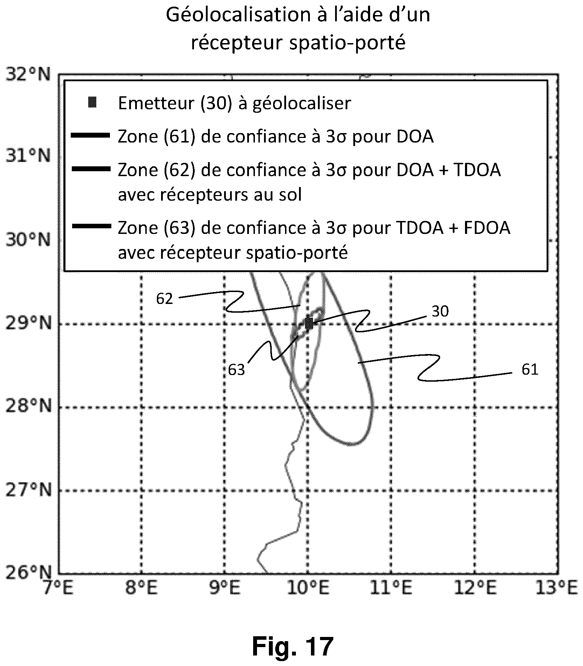

La figure 17 représente une estimation de la position géographique de l'émetteur 30 pour le troisième mode de mise en oeuvre avec une géolocalisation de type TDOA et FDOA impliquant un récepteur 40a, 40b au sol et un récepteur 40c embarqué dans un satellite. Sur la figure 17, la zone 61 représente les positions géographiques possibles de l'émetteur 30 pour une incertitude à $3\sigma$ pour la méthode DOA seule ; la zone 61 représente les positions géographiques possibles de l'émetteur 30 pour une incertitude à $3\sigma$ pour une association des méthodes DOA et TDOA avec deux récepteurs 40a, 40b au sol ; la zone 63 représente les positions géographiques possibles de l'émetteur 30 pour une incertitude à $3\sigma$ pour une association des méthodes TDOA et FDOA avec un récepteur 40a ou 40b au sol et un récepteur 40c embarqué dans un satellite.

Il est à noter que la combinaison des données satellitaires et d'un unique récepteur terrestre peut dans la majorité des cas être suffisante pour obtenir une géolocalisation non ambiguë. Cette géolocalisation peut être plus précise que les géolocalisations obtenues à partir de moyens purement terrestres.

On peut noter sur la figure 17 qu'une géolocalisation combinant le temps de propagation différentiel (TDOA) et la fréquence d'arrivée différentielle (FDOA) avec un récepteur spatio-porté permet d'obtenir des résultats bien plus précis qu'une géolocalisation uniquement à base de DOA.

Dans les résultats décrits précédemment en référence aux figures 10 à 17, il est supposé que la propagation dans l'ionosphère est parfaitement connue. En réalité, l'imperfection de la connaissance de l'ionosphère et les imprécisions des modèles de propagation engendrent généralement une erreur supplémentaire. On peut qualitativement essayer de modéliser cette erreur en faisant varier l'état de l'ionosphère autour de son état théorique. Pour l'exemple considéré ici, on suppose arbitrairement que l'état ionosphérique réel correspond à l'état ionosphérique modélisé par le modèle avec une incertitude sur le temps de prise en compte de l'état d'ionisation correspondant à un écart type d'une heure.

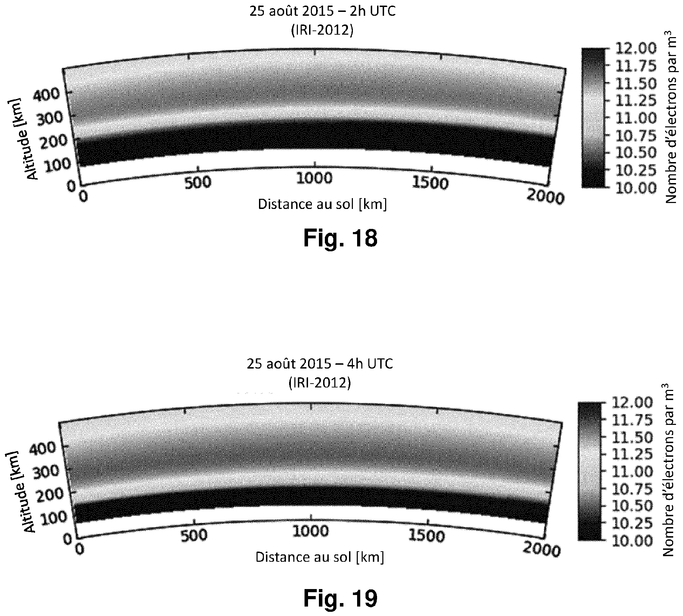

Les figures 18 et 19 illustrent la variation de l'état ionosphérique en considérant une telle incertitude. Les figures 18 et 19 représentent la densité d'électrons dans l'ionosphère (nombre d'électrons par $m^3$) respectivement une heure avant et une heure après l'instant d'émission du signal HF considéré dans la simulation. Il apparaît sur ces figures que l'épaisseur des différentes couches de l'ionosphère (correspondant respectivement à différentes densités d'électrons) varient de façon non négligeable au cours de cette période de temps.

En comparant la valeur des paramètres de géolocalisation (direction d'arrivée, différence de temps d'arrivée ou différence de fréquence d'arrivée du signal à plus ou moins une heure de la date théorique, on obtient alors une incertitude supplémentaire se rajoutant à l'incertitude sur l'estimation des paramètres. La valeur de cette incertitude supplémentaire est environ :

- 1° sur l'angle d'élévation,
- 30 us sur le temps de propagation différentiel,
- 1Hz sur la fréquence d'arrivée différentielle.

L'impact de cette incertitude supplémentaire sur la précision de géolocalisation est représenté sur la figure 20 qui est à comparer à la figure 17. La précision de la géolocalisation de l'émetteur 30 reste toutefois très satisfaisante, notamment lorsqu'un récepteur 40c spatio-porté est utilisé.

La description ci-avant illustre clairement que, par ses différentes caractéristiques et leurs avantages, la présente invention atteint les objectifs fixés. En particulier, la prise en compte d'un état instantané de l'ionosphère au moment où est capté un signal HF permet d'aboutir à un modèle de propagation très précis. Aussi, l'inclusion de paramètres de géolocalisation déterminés à partir de mesures satellitaires améliorent de façon significative la précision de la géolocalisation de l'émetteur HF.

**Revendications**

1. Procédé (100) pour géolocaliser un émetteur (30) d'un signal radio dans le domaine des hautes fréquences (HF), ledit procédé comportant :

   - une détermination (101) d'une valeur d'au moins un paramètre relatif audit signal radio émis par l'émetteur (30), la valeur du paramètre étant dépendante de la position géographique de l'émetteur (30) à l'instant où le signal est émis, la valeur du paramètre étant déterminée à partir de mesures effectuées sur le signal par un ou plusieurs récepteurs (40a, 40b, 40c) dont l'un au moins est embarqué dans un satellite en orbite autour de la Terre,
   - une génération (103) d'un modèle de propagation représentant, pour chacune d'une pluralité de positions candidates de l'émetteur (30) au sein d'une région géographique d'intérêt, une valeur modélisée dudit paramètre en se basant sur une modélisation (102) d'un état instantané de l'ionosphère, c'est-à-dire une modélisation (102) d'un état de l'ionosphère à un instant particulier correspondant à l'instant où les mesures sont effectuées,
   - une estimation (104) de la position géographique de l'émetteur (30) au moment où le signal est émis à partir de la valeur ainsi déterminée pour ledit au moins un paramètre et du modèle de propagation ainsi généré.

2. Procédé (100) selon la revendication 1 dans lequel le paramètre relatif au signal radio émis par l'émetteur (30) figure parmi :

   - une direction d'arrivée du signal au niveau d'un récepteur (40a),
   - une différence de temps d'arrivée du signal entre au moins deux récepteurs (40a, 40b, 40c),
   - une différence de fréquence d'arrivée du signal entre au moins deux récepteurs (40a, 40b, 40c).

3. Procédé (100) selon l'une des revendications 1 à 2 dans lequel au moins deux paramètres différents sont utilisés.

4. Procédé (100) selon la revendication 3 dans lequel lesdits au moins deux paramètres sont :

   - une différence de temps d'arrivée du signal entre au moins deux récepteurs (40a, 40b, 40c), et
   - une différence de fréquence d'arrivée du signal entre au moins deux récepteurs (40a, 40b, 40c).

5. Procédé (100) selon l'une des revendications 1 à 4 dans lequel l'estimation (104) de la position géographique de l'émetteur (30) comporte la détermination d'une position géographique qui minimise une différence quadratique entre la valeur de paramètre déterminée pour l'émetteur (30) à géolocaliser et les valeurs de ce paramètre modélisées par le modèle de propagation pour les différentes positions candidates.

6. Procédé (100) selon les revendications 3 et 5 dans lequel la différence quadratique est pondérée par une variance d'erreur sur la valeur de paramètre déterminée pour l'émetteur (30) à géolocaliser.

7. Procédé (100) selon l'une des revendications 1 à 6 dans lequel la modélisation d'un état instantané de l'ionosphère est obtenue en combinant un modèle statistique de l'état de l'ionosphère ou un modèle de physique ionosphérique avec une observation in-situ instantanée de l'ionosphère.

8. Dispositif (20) de géolocalisation d'un émetteur (30) d'un signal radio dans le domaine des hautes fréquences (HF), ledit dispositif (20) de géolocalisation étant adapté pour recevoir des mesures effectuées par un ou plusieurs récepteurs (40a, 40b, 40c) sur un signal radio émis par ledit émetteur (30), ledit dispositif (20) comportant :

   - une unité de traitement (21) configurée pour déterminer une valeur pour au moins un paramètre relatif audit signal radio, la valeur du paramètre étant dépendante de la position géographique de l'émetteur (30) à l'instant où le signal est émis, la valeur du paramètre étant déterminée à partir des mesures effectuées par le ou les récepteurs (40a, 40b, 40c),
   - une unité de localisation (22) configurée pour générer un modèle de propagation représentant, pour chacune d'une pluralité de positions candidates de l'émetteur (30) au sein d'une région géographique d'intérêt, une valeur modélisée dudit paramètre en se basant sur une modélisation d'un état instantané de l'ionosphère, c'est-à-dire une modélisation d'un état de l'ionosphère à un instant particulier correspondant à l'instant où les mesures sont effectuées, et pour estimer la position géographique de l'émetteur (30) à partir de la valeur déterminée pour ledit au moins un paramètre et du modèle de propagation généré,

**caractérisé en ce que** l'un au moins des récepteurs, desquels ledit dispositif (20) de géolocalisation est adapté pour recevoir et traiter des mesures, est embarqué dans un satellite en orbite autour de la Terre.

9. Dispositif (20) selon la revendication 8 dans lequel le paramètre relatif au signal radio émis par l'émetteur (30) figure parmi :

   - une direction d'arrivée du signal au niveau d'un récepteur (40a),
   - une différence de temps d'arrivée du signal entre au moins deux récepteurs (40a, 40b, 40c),
   - une différence de fréquence d'arrivée du signal entre au moins deux récepteurs (40a, 40b, 40c).

10. Dispositif (20) selon l'une des revendications 8 à 9 dans lequel au moins deux paramètres différents sont utilisés.

11. Dispositif (20) selon l'une des revendications 8 à 10 dans lequel l'unité de localisation (22) est configurée pour modéliser un état instantané de l'ionosphère en combinant un modèle statistique de l'état de l'ionosphère ou un modèle de physique ionosphérique avec une observation in-situ instantanée de l'ionosphère.

12. Dispositif (20) selon l'une des revendications 8 à 11 dans lequel l'unité de localisation (22) est configurée pour estimer la position géographique de l'émetteur (30) en déterminant la position géographique qui minimise une différence quadratique entre la valeur de paramètre déterminé et les valeurs de ce paramètre modélisées par le modèle de propagation pour les différentes positions candidates.

13. Système (10) de géolocalisation comportant un dispositif (20) de géolocalisation selon l'une des revendications 8 à 12 et au moins un récepteur (40c) destiné à être embarqué dans un satellite en orbite autour de la Terre.

14. Produit programme d'ordinateur **caractérisé en ce qu'**il comporte un ensemble d'instructions de code de programme qui, lorsqu'elles sont exécutées par un ou plusieurs processeurs, configurent le ou les processeurs pour mettre en oeuvre un procédé (100) selon l'une des revendications 1 à 7.


**Patentansprüche**

1. Verfahren (100) zur Geolokalisierung eines Emitters (30) eines Funksignals im Hochfrequenzbereich (HF), wobei das Verfahren beinhaltet:

   - eine Ermittlung (101) eines Werts mindestens eines Parameters, der sich auf das vom Emitter (30) emittierte Funksignal bezieht, wobei der Wert des Parameters von der geografischen Position des Emitters (30) zum Zeitpunkt der Emittierung des Signals abhängt, wobei der Wert des Parameters ausgehend von Messungen ermittelt wird, die am Signal durch einen oder mehrere Empfänger (40a, 40b, 40c) vorgenommen werden, von denen mindestens einer in einem Satelliten auf der Erdumlaufbahn eingebaut ist,
   - eine Erzeugung (103) eines Ausbreitungsmodells, das für jede einer Vielzahl von Kandidatenpositionen des Emitters (30) innerhalb einer geografischen Region von Interesse einen modellierten Wert des Parameters auf der Grundlage einer Modellierung (102) eines momentanen Ionosphärenzustands darstellt, das heißt, eine Modellierung (102) eines Ionosphärenzustands zu einem bestimmten Zeitpunkt, der dem Zeitpunkt entspricht, zu dem die Messungen vorgenommen werden,
   - eine Schätzung (104) der geografischen Position des Emitters (30) im Moment der Emittierung des Signals ausgehend vom Wert, der so ermittelt wird für den mindestens einen Parameter, und dem so erzeugten Ausbreitungsmodell.

2. Verfahren (100) nach Anspruch 1, wobei der Parameter, der sich auf das vom Emitter (30) emittierte Funksignal bezieht, gehörend ist zu:

   - einer Richtung des Eingangs des Signals im Bereich eines Empfängers (40a),
   - einer Differenz in der Ankunftszeit des Signals zwischen mindestens zwei Empfängern (40a, 40b, 40c),
   - einer Differenz der Ankunftsfrequenz des Signals zwischen mindestens zwei Empfängern (40a, 40b, 40c).

3. Verfahren (100) nach einem der Ansprüche 1 bis 2, wobei mindestens zwei verschiedene Parameter verwendet werden.

4. Verfahren (100) nach Anspruch 3, wobei die mindestens zwei Parameter sind:

    - eine Differenz der Ankunftszeit des Signals zwischen mindestens zwei Empfängern (40a, 40b, 40c), und
    - eine Differenz der Ankunftsfrequenz des Signals zwischen mindestens zwei Empfängern (40a, 40b, 40c).

5. Verfahren (100) nach einem der Ansprüche 1 bis 4, wobei die Schätzung (104) der geografischen Position des Emitters (30) die Ermittlung einer geografischen Position beinhaltet, die eine quadratische Differenz zwischen dem für den zu geolokalisierenden Emitter (30) ermittelten Wert des Parameters und den durch das Ausbreitungsmodell für die verschiedenen Kandidatenpositionen modellierten Werten dieses Parameters minimiert.

6. Verfahren (100) nach den Ansprüchen 3 und 5, wobei die quadratische Differenz durch eine Fehlerabweichung auf dem für den zu geolokalisierenden Emitter (30) ermittelten Wert des Parameters gewichtet wird.

7. Verfahren (100) nach einem der Ansprüche 1 bis 6, wobei die Modellierung eines momentanen Ionosphärenzustands durch Kombinieren eines statistischen Modells des Ionosphärenzustands oder eines physischen Modells der Ionosphäre mit einer momentanen In-Situ-Beobachtung der Ionosphäre erhalten wird.

8. Vorrichtung (20) zur Geolokalisierung eines Emitters (30) eines Funksignals im Hochfrequenzbereich (HF), wobei die Geolokalisierungsvorrichtung (20) angepasst ist, um Messungen zu empfangen, die von einem oder mehreren Empfängern (40a, 40b, 40c) mit einem vom Emitter (30) emittierten Funksignal vorgenommen wurden, wobei die Vorrichtung (20) beinhaltet:

    - eine Verarbeitungseinheit (21), die konfiguriert ist, um einen Wert für mindestens einen Parameter, der sich auf das Funksignal bezieht, zu ermitteln, wobei der Wert des Parameters von der geografischen Position des Emitters (30) zum Zeitpunkt der Emittierung des Signals abhängt, wobei der Wert des Parameters ausgehend von den Messungen ermittelt wird, die durch den oder die Empfänger (40a, 40b, 40c) vorgenommen werden,
    - eine Lokalisierungseinheit (22), die konfiguriert ist, um ein Ausbreitungsmodell zu erzeugen, das für jede einer Vielzahl von Kandidatenpositionen des Emitters (30) innerhalb einer geografischen Region von Interesse einen modellierten Wert des Parameters auf der Grundlage einer Modellierung eines momentanen Ionosphärenzustands darstellt, das heißt, eine Modellierung eines Ionosphärenzustands zu einem bestimmten Zeitpunkt, der dem Zeitpunkt entspricht, zu dem die Messungen vorgenommen werden, und um die geografische Position des Emitters (30) ausgehend vom dem für den mindestens einen Parameter ermittelten Wert und dem erzeugten Ausbreitungsmodell zu schätzen,

    **dadurch gekennzeichnet, dass** mindestens einer der Empfänger, von denen die Geolokalisierungsvorrichtung (20) angepasst ist, um Messungen zu empfangen und zu verarbeiten, in einem Satelliten auf der Erdumlaufbahn eingebaut ist.

9. Vorrichtung (20) nach Anspruch 8, wobei der Parameter, der sich auf das vom Emitter (30) emittierte Funksignal bezieht, gehörend ist zu:

    - einer Richtung des Eingangs des Signals im Bereich eines Empfängers (40a),
    - einer Differenz in der Ankunftszeit des Signals zwischen mindestens zwei Empfängern (40a, 40b, 40c),
    - einer Differenz der Ankunftsfrequenz des Signals zwischen mindestens zwei Empfängern (40a, 40b, 40c).

10. Vorrichtung (20) nach einem der Ansprüche 8 bis 9, wobei mindestens zwei verschiedene Parameter verwendet werden.

11. Vorrichtung (20) nach einem der Ansprüche 8 bis 10, wobei die Lokalisierungseinheit (22) konfiguriert ist, um einen momentanen Zustand der Ionosphäre zu modellieren, indem ein statistisches Modell des Ionosphärenzustands oder ein physisches Modell der Ionosphäre mit einer momentanen In-Situ-Beobachtung der Ionosphäre kombiniert wird.

12. Vorrichtung (20) nach einem der Ansprüche 8 bis 11, wobei die Lokalisierungseinheit (22) konfiguriert ist, um die geografische Position des Emitters (30) zu schätzen, indem die geografische Position ermittelt wird, die eine quadratische Differenz zwischen dem ermittelten Wert des Parameters und den Werten des Parameters, die durch das Ausbreitungsmodell für die verschiedenen Kandidatenpositionen modelliert werden, minimiert.

13. Geolokalisierungssystem (10), eine Geolokalisierungsvorrichtung (20) nach einem der Ansprüche 8 bis 12 beinhaltend, und mindestens einen Empfänger (40c), der vorgesehen ist, um in einem Satelliten auf der Erdumlaufbahn eingebaut zu werden.

14. Computerprogrammprodukt, **dadurch gekennzeichnet, dass** es eine Reihe von Programmcodebefehlen beinhaltet, die, wenn sie von einem oder mehreren Prozessoren ausgeführt werden, den oder die Prozessoren so konfigurieren, dass sie ein Verfahren (100) nach einem der Ansprüche 1 bis 7 ausführen.

**Claims**

1. A method (100) for geolocating an emitter (30) of a radio signal in the high frequency (HF) domain, said method including:

   - a determination (101) of a value of at least one parameter relating to said radio signal emitted by the emitter (30), the value of the parameter being dependent on the geographical position of the emitter (30) at the moment where the signal is emitted, the value of the parameter being determined from measurements carried out on the signal by one or more receivers (40a, 40b, 40c) at least one of which is on board a satellite in orbit around the Earth,
   - a generation (103) of a propagation model representing, for each of a plurality of candidate positions of the emitter (30) within a geographical region of interest, a modelled value of said parameter based on a modelling (102) of an instantaneous state of the ionosphere, that is to say a modelling (102) of a state of the ionosphere at a particular instant corresponding to the instant when the measurements are carried out,
   - an estimation (104) of the geographical position of the emitter (30) at the moment when the signal is emitted from the value thus determined for said at least one parameter and from the propagation model thus generated.

2. The method (100) according to claim 1 wherein the parameter relating to the radio signal emitted by the emitter (30) appears among:

   - a direction of arrival of the signal at a receiver (40a),
   - a difference in signal arrival time between at least two receivers (40a, 40b, 40c),
   - a difference in signal arrival frequency between at least two receivers (40a, 40b, 40c).

3. The method (100) according to one of claims 1 to 2 wherein at least two different parameters are used.

4. The method (100) according to claim 3 wherein said at least two parameters are:

   - a difference in signal arrival time between at least two receivers (40a, 40b, 40c), and
   - a difference in signal arrival frequency between at least two receivers (40a, 40b, 40c).

5. The method (100) according to one of claims 1 to 4 wherein the estimation (104) of the geographical position of the emitter (30) includes the determination of a geographical position which minimises a quadratic difference between the parameter value determined for the emitter (30) to be geolocated and the values of this parameter modelled by the propagation model for the different candidate positions.

6. The method (100) according to claims 3 and 5 wherein the quadratic difference is weighted by an error variance on the parameter value determined for the emitter (30) to be geolocated.

7. The method (100) according to one of claims 1 to 6 wherein the modelling of an instantaneous state of the ionosphere is obtained by combining a statistical model of the state of the ionosphere or an ionospheric physics model with an instantaneous in-situ observation of the ionosphere.

8. A device (20) for geolocating an emitter (30) of a radio signal in the high frequency (HF) domain, said geolocation device (20) being adapted to receive measurements carried out by one or more receivers (40a, 40b, 40c) on a radio signal emitted by said emitter (30), said device (20) including:

   - a processing unit (21) configured to determine a value for at least one parameter relating to said radio signal, the value of the parameter being dependent on the geographical position of the emitter (30) at the instant when the signal is emitted, the value of the parameter being determined from the measurements carried out by the receiver(s) (40a, 40b, 40c),

- a location unit (22) configured to generate a propagation model representing, for each of a plurality of candidate positions of the emitter (30) within a geographical region of interest, a modelled value of said parameter based on a modelling of an instantaneous state of the ionosphere, that is to say a modelling of a state of the ionosphere at a particular instant corresponding to the instant when the measurements are carried out, and to estimate the geographical position of the emitter (30) from the value determined for said at least one parameter and the propagation model generated,

**characterised in that** at least one of the receivers, of which said geolocation device (20) is adapted to receive and process measurements, is on board a satellite in orbit around the Earth.

9. The device (20) according to claim 8 wherein the parameter relating to the radio signal emitted by the emitter (30) appears among:

- a direction of arrival of the signal at a receiver (40a),
- a difference in signal arrival time between at least two receivers (40a, 40b, 40c),
- a difference in signal arrival frequency between at least two receivers (40a, 40b, 40c).

10. The device (20) according to one of claims 8 to 9 wherein at least two different parameters are used.

11. The device (20) according to one of claims 8 to 10 wherein the location unit (22) is configured to model an instantaneous state of the ionosphere by combining a statistical model of the state of the ionosphere or an ionospheric physics model with an instantaneous in-situ observation of the ionosphere.

12. The device (20) according to one of claims 8 to 11 wherein the location unit (22) is configured to estimate the geographic position of the emitter (30) by determining the geographic position which minimises a quadratic difference between the determined parameter value and the values of this parameter modelled by the propagation model for the different candidate positions.

13. A geolocation system (10) including a geolocation device (20) according to one of claims 8 to 12 and at least one receiver (40c) intended to be on board a satellite in orbit around the Earth.

14. A computer program product **characterised in that** it includes a set of program code instructions which, when executed by one or more processors, configure the processor(s) to implement a method (100) according to one of claims 1 to 7.

Fig. 1

FDOA pour un émetteur d'un signal à 9,2 MHz à 3h UTC

**Fig. 2**

FDOA pour un émetteur d'un signal à 9,2 MHz à 19h UTC

**Fig. 3**

FDOA pour un émetteur d'un signal à 15,1 MHz à 3h UTC

Fig. 4

FDOA pour un émetteur d'un signal à 15,1 MHz à 19h UTC

Fig. 5

Propagation d'un signal à 9,2 MHz depuis Toulouse
vers le Nord à 19h UTC le 26 août 2019

## Fig. 6

Propagation d'un signal à 9,2 MHz depuis Toulouse
vers le Nord à 4h UTC le 26 août 2019

## Fig. 7

**Fig. 8**

**Fig. 9**

40a

40b

30

40c

■ Emetteur (30) à géolocaliser
★ Réseau DOA (40a)
● Récepteur (40b) mono-antenne au sol
◆ Récepteur (40c) spatio-porté

**Fig. 10**

Angle d'élévation en fonction de
la position de l'émetteur

Fig. 11

Géolocalisation DOA

Fig. 12

TDOA entre deux récepteurs au sol

Fig. 13

Géolocalisation DOA + TDOA

Fig. 14

TDOA entre un récepteur au sol et un récepteur spatio-porté

Emetteur (30) à géolocaliser
Récepteur (40a) au sol
Récepteur (40c) spatio-porté

Fig. 15

FDOA entre un récepteur au sol et un récepteur spatio-porté

Fig. 16

Géolocalisation à l'aide d'un
récepteur spatio-porté

■  Emetteur (30) à géolocaliser

──  Zone (61) de confiance à 3σ pour DOA

──  Zone (62) de confiance à 3σ pour DOA + TDOA
avec récepteurs au sol

──  Zone (63) de confiance à 3σ pour TDOA + FDOA
avec récepteur spatio-porté

**Fig. 17**

25 août 2015 – 2h UTC
(IRI-2012)

**Fig. 18**

25 août 2015 – 4h UTC
(IRI-2012)

**Fig. 19**

■ Emetteur (30) à géolocaliser

— Zone (61) de confiance à 3σ pour DOA

— Zone (62) de confiance à 3σ pour DOA + TDOA
avec récepteurs au sol

— Zone (63) de confiance à 3σ pour TDOA + FDOA
avec récepteur spatio-porté

**Fig. 20**

**EP 4 022 338 B1**

## RÉFÉRENCES CITÉES DANS LA DESCRIPTION

**Documents brevets cités dans la description**

- US 2017205492 A1
- US 2019120928 A1